# EUROPÄISCHE PATENTSCHRIFT

(11) **EP 4 232 188 B1**
(45) Veröffentlichungstag und Bekanntmachung des Hinweises auf die Patenterteilung: **28.01.2026**
(21) Anmeldenummer: 21836457.8
(22) Anmeldetag: 10.12.2021
(51) Int. Cl.: B01J 19/12, C01B 3/32

(54) **LICHTREAKTOR SOWIE VERFAHREN ZUR SYNTHETISCHEN STOFFERZEUGUNG MITTELS LICHTBESTRAHLUNG**
LIGHT REACTOR AND METHOD FOR SYNTHETIC MATERIAL PRODUCTION BY MEANS OF LIGHT IRRADIATION
RÉACTEUR DE LUMIÈRE ET PROCÉDÉ DE PRODUCTION DE MATÉRIAU SYNTHÉTIQUE AU MOYEN D'UNE IRRADIATION DE LUMIÈRE

(30) Priorität: 11.12.2020 DE 102020133218
(43) Veröffentlichungstag der Anmeldung: 30.08.2023
(73) Patentinhaber: Bartenbach Holding GmbH, 6071 Aldrans (AT)
(72) Erfinder: ANSELM, Christian, 6112 Wattens (AT); FÖGER, Daniel, 6424 Silz (AT); REISECKER, Christian, 6166 Fulpmes (AT); BRÜGGELER, Peter, 6176 Völs (AT); PANN, Johann, 6020 Innsbruck (AT); PRAST, Johannes, 6020 Innsbruck (AT)
(74) Vertreter: Lorenz Seidler Gossel Part. mbB
(86) Internationale Anmeldenummer: PCT/EP2021/085266
(87) Internationale Veröffentlichungsnummer: WO 2022/123041

(56) Entgegenhaltungen:
- EP-A1- 1 466 807
- EP-A1- 2 339 225
- WO-A1-2013/091654
- WO-A1-2018/098189
- DE-A1- 102019 003 299
- DE-T5- 112010 005 248

## Beschreibung

Die vorliegende Erfindung betrifft einen Lichtreaktor zum synthetischen Erzeugen und/oder photochemischen Behandeln von Stoffen, umfassend einen Aufnahmeraum zum Aufnehmen zu bearbeitender Stoffe und/oder eines Reaktionsgefäßes für die zu bestrahlenden Stoffe, zumindest einer Lichtquelle sowie einer Optik zum Umlenken des Lichts aus der Lichtquelle auf den Aufnahmeraum. Die Erfindung betrifft ferner auch ein Verfahren zur synthetischen Stofferzeugung und/oder -behandlung unter Verwendung eines solchen Lichtreaktors.

In jüngerer Zeit wird versucht, Wasserstoff in Lichtreaktoren synthetisch herzustellen. Dabei wird Wasser zusammen mit einem Substrat und einem oder mehrerer Katalysatoren in einem Aufnahmeraum eines Lichtreaktors mit Licht bestrahlt, wobei ein sogenannter Chromophor, das heißt ein Farbstoff oder Farbträger das Licht absorbiert und die Lichtenergie über einen Wasserreduktionskatalysator an das Wasser überträgt, sodass eine Umwandung in H₂ erzielt wird. Der Chromophor und andere eingesetzte Substanzen sind dabei in der Lage, die genannte Reaktion wiederholt durchzuführen, was die Substanzen als Katalysatoren identifiziert.

Die genannten Lichtreaktoren werden jedoch auch für andere photochemische Stoffbehandlungen und -erzeugungen eingesetzt, wobei die zu bestrahlenden Stoffe üblicherweise in einem Reaktionsgefäß wie beispielsweise einem Glaskolben oder einer transparenten Phiole in den Aufnahmeraum des Behälters gegeben werden, um dort gezielt mit Licht bestrahlt zu werden, welches die gewünschte Reaktion bewirken bzw. in Gang setzen kann.

Beispielsweise beschreibt die Schrift WO 2018/098189 A1 einen Lichtreaktor, dessen Reaktorgehäuse eine Öffnung aufweist, durch die hindurch eine Phiole mit den zu bestrahlenden Stoffen in einen Aufnahmeraum im Inneren des Gehäuses eingesetzt werden kann. Durch eine zweite Gehäuseöffnung hindurch strahlt ein außerhalb des Gehäuses angeordneter UV-Lichtstrahler Licht in das Gehäuse, das im Inneren des Gehäuses durch mehrere Spiegel umgelenkt wird, um gezielt den Aufnahmeraum und die dort angeordneten Phiolen zu bestrahlen. Allerdings ist die Effizienz dieses vorbekannten Reaktors begrenzt. Zum einen ist das Strahlungsfeld im Aufnahmeraum wenig homogen. Zudem ist die Leistungsdichte im Bereich der eingesetzten Glaskolben relativ niedrig, sodass spezielle synthetische Anwendungen erst gar nicht in Gang gesetzt werden können oder zumindest eine übermäßig lange Zeit dauern. Gleichzeitig ist es zeitaufwendig, den jeweils benötigten oder sinnvollen Spektralbereich für verschiedene Reaktionen einstellen zu können und den Lichtreaktor hierfür umzurüsten.

Aus der Schrift DE 11 2010 005 248 T5 ist es bekannt, LED-Bänder mit clusterartig verteilten LEDs für photoinduzierte Härtungsverfahren zu verwenden, wobei sich die Schrift erhofft, durch ein solches clusterartiges LED-Array eine gleichmäßigere Strahlungsintensität zu erzielen. Eine solche Vergleichmäßigung dürfte allerdings auf die zu behandelnden, großflächigen Photopapiere bzw. Bildplatten beschränkt sein. Für einen Reaktor mit einem Aufnahmeraum, in dem verschiedene zu behandelnde Stoffe vorzugsweise in Glaskolben oder ähnlichen Reaktorgefäßen, in unterschiedlich großen Dimensionen positioniert werden, sind die LED-Bänder nicht geeignet und kaum in der Lage, das jeweils abgegebene Licht gezielt auf einen definierten Reaktionsraum zu lenken.

Der vorliegenden Erfindung liegt die Aufgabe zugrunde, einen verbesserten Lichtreaktor sowie ein verbessertes Verfahren zur synthetischen Stoffbehandlung und/oder -erzeugung mittels eines solchen Lichtreaktors der genannten Art zu schaffen, die Nachteile des Standes der Technik vermeiden und letzteren in vorteilhafter Weise weiterbilden. Insbesondere soll eine effiziente Bestrahlung der Stoffe im Aufnahmeraum mit hoher Leistungsdichte und Gleichmäßigkeit erreicht werden, die an verschiedene Reaktionstypen einfach anpassbar ist und exakt zu steuern ist.

Erfindungsgemäß wird die genannte Aufgabe durch einen Lichtreaktor gemäß Anspruch 1, ein Verfahren zum synthetischen Stoffbehandeln und/oder -erzeugen durch Lichtbestrahlung gemäß Anspruch 13 sowie die Verwendung eines Lichtreaktors gemäß Anspruch 15gelöst. Bevorzugte Ausgestaltungen der Erfindung sind Gegenstand der abhängigen Ansprüche.

Es wird also vorgeschlagen, eine Vielzahl von Lichtquellen und zugeordneten Optikelementen ringförmig um den Aufnahmeraum des Lichtreaktors herum zu verteilen, um den Aufnahmeraum aus verschiedenen Richtungen gleichzeitig bestrahlen zu können. Erfindungsgemäß sind die Vielzahl von Lichtquellen und die Vielzahl von Optikelementen in mehreren Reihen um den Aufnahmeraum herum verteilt angeordnet, wobei die Optikelemente jeweils dazu ausgebildet sind, das jeweils eingefangene Licht auf den im Zentrum der ringförmigen Lichtquellen- und Optikelementeanordnung befindlichen Aufnahmeraum zu lenken. Dabei sind die Optikelemente mit ihren Hauptabstrahlachsen von Reihe zu Reihe zur Längsachse des ringförmigen Bereichs, in dem die Optikelemente um den Aufnahmeraum herum verteilt angeordnet sind, unterschiedlich verkippt angeordnet, sodass die von den Optikelementen geformten Lichtbündel gemeinsam einen eingeschnürten Strahlungsraum bilden, der zwischen zwei Kegelspitzen eingeschnürt ist und sein Zentrum im zentralen Bereich des Aufnahmebereiches hat. Der von den Lichtbündeln gebildete Strahlungsraum bildet einen zumindest näherungsweise rotationssymmetrischen Körper, dessen umfangsseitige Hüllfläche von den mehrreihig angeordneten Optikelementen gebildet wird und dessen stirnseitige Hüllflächen von zwei virtuellen Kegeln gebildet werden, die sich koaxial zur genannten Längsachse des ringförmigen Bereichs erstrecken und mit ihren Spitzen aufeinander zugewandt sind, wobei sich die Kegelspitzen berühren können bzw. sehr nahe aneinander liegend angeordnet sein können. Der von den Lichtbündeln gemeinsam gebildete Strahlungsraum ist also etwa sanduhrförmig bzw. stundenglasartig eingeschnürt bzw. konturiert wie ein Hüllkörper, der den Einschnürungsbereich eines Stundenglases außenseitig umschließt. Die virtuellen Kegel, die den Strahlungsraum zwischen sich begrenzen, müssen dabei keine exakte Kegelform im mathematischen Sinne besitzen, was sie gleichwohl können, sondern können zwei näherungsweise kegelige Spitzkörper oder zwei Bergspitzen bilden, die mit ihren ggf. auch abgerundeten oder abgeflachten Spitzen einander zugewandt zumindest näherungsweise koaxial angeordnet sind.

Durch eine solche Einschnürung des Strahlungsraums überlagern sich die einzelnen Lichtbündel im Zentrum des Aufnahmeraums, indem hierdurch sehr hohe Intensitäten erzielt werden können. Solche hohen Lichtintensitäten ermöglichen nicht lineare Reaktionen, die mit geringeren Intensitäten auch bei sehr langer Bestrahlung nicht erzielt werden könnten. Ähnlich einem Dammbruch kann bei Überschreiten einer bestimmten Intensität ein alternativer Stoff erzeugt bzw. eine andere synthetische Stofferzeugung erzielt werden, die unterhalb eines Schwellwerts der Intensität auch bei sehr langer Bestrahlung nicht erzielt werden könnte. Eine solche Zweiphotonenanregung bzw. nicht-lineare optische Anregung kann durch die erfindungsgemäße Ausbildung und Anordnung der Optikelemente, die in der genannten Weise das zwischen zwei Kegeln eingeschnürte Strahlungsfeld erzeugen, auch mit Lichtquellen erzielt werden, die selbst eine geringere Leistung haben, wie beispielsweise LEDs.

Durch die Verwendung einer Vielzahl von Lichtquellen und zugeordneten Lichtelementen kann in einfacher Weise der benötigte Spektralbereich variabel eingestellt werden. Gleichzeitig kann durch die ring- oder kugelartige Verteilung um den Aufnahmeraum herum ein sehr homogenes Strahlungsfeld im zentralen Bereich des Systems erzielt werden, sodass eine maximale Reaktionseffizienz erhalten wird. Dabei können hohe Leistungsdichten erreicht werden, die den Zeitaufwand für die gewünschte Reaktion signifikant verkürzen.

In vorteilhafter Weiterbildung der Erfindung können die Lichtquellen und/oder Optikelemente mit ihren Hauptabstrahlrichtungen bzw. -achsen matrixartig oder wolkenförmig verteilt angeordnet sein. Die genannten Hauptabstrahlachsen der Optikelemente sind senkrecht zu einer gemeinsamen Kugeloberfläche um das Zentrum des Aufnahmeraums herum ausgerichtet. Mit anderen Worten fallen die von den Optikelementen geformten Lichtbündeln mit ihren Hauptachsen von verschiedenen Seiten und Richtungen her näherungsweise radial zum Zentrum des Aufnahmeraums auf die zu behandelnden Stoffe, sodass sich die von verschiedenen Seiten einfallenden Lichtbündel im Aufnahmeraum treffen.

Es werden also separate Lichtbündel an den diversen Optikelementen geformt, die sich an den Optikelementen noch nicht überlagern und dann im zentralen Bereich des Aufnahmeraums treffen und überlagern. Die Optikelemente sind in einem ringförmigen Bereich um den Aufnahmeraum herum verteilt angeordnet, sodass eine insgesamt gleichmäßige Bestrahlung und Überlagerung der Lichtbündel im Aufnahmeraum erzielt werden kann, wobei gleichzeitig die praktische Handhabbarkeit wie das Einsetzen und Herausnehmen eines Aufnahmegefäß erhalten bleibt.

Die Optikelemente können punktsymmetrisch bezüglich des Zentrums des Aufnahmeraums verteilt angeordnet sein, sodass jeweils gegenüberliegende Paare von Optikelementen koaxiale Hauptabstrahlachsen haben, zumindest näherungsweise. Dabei können sich alle Hauptabstrahlachsen in einem gemeinsamen Punkt, der das Zentrum des Aufnahmeraums bildet, schneiden, wobei der gemeinsame Schnittpunkt kein Punkt im mathematischen Sinne sein muss, sondern eine gewisse Ausdehnung haben kann, sodass die Hauptabstrahlachsen der Optikelemente sozusagen einen Knäuelpunkt als gemeinsamen Schnittpunkt haben.

Die Lichtbündel selbst können von den Optikelementen jeweils stundenglasartig eingeschnürt geformt werden, sodass sich die Einschnürung des Lichtbündels im Zentrum des Aufnahmeraums befindet, wobei die ringförmig in mehreren Reihen verteilt angeordneten Optikelemente so ausgerichtet sein können, dass sich die Einschnürbereiche der Lichtbündel im besagten Zentrum des Aufnahmeraums überlagern.

Dabei können die Hauptabstrahlachsen der Optikelemente, die in einer Ringreihe angeordnet sind, die gleiche Verkippung zur Ringlängsachse haben, während sich die Verkippung von Reihe zu Reihe verändert. Beispielsweise kann eine zentrale Reihe von Optikelementen Hauptabstrahlachsen besitzen, die sich rechtwinklig bzw. radial zur Ringlängsachse erstrecken, während die Hauptabstrahlachsen der Optikelemente in dazu benachbarten Reihen um einen spitzen Winkel α und einen spitzen Winkel -α bzw. -β zur Längsachse des ringförmigen Bereichs verkippt sein können, beispielsweise derart, dass sich die Hauptabstrahlachsen der Optikelemente einer oberen Reihe unter einem Winkel von beispielsweise 70° bis 80° zur Ringlängsachse nach unten erstrecken und die Hauptabstrahlachsen der Optikelemente einer unteren Reihe unter einem Winkle von 70° bis 80° nach oben erstrecken. Mit anderen Worten können sich die Hauptabstrahlachsen der Optikelemente einer Ringreihe beispielsweise parallel zu einer Ebene senkrecht zur Ringlängsachse erstrecken, während sich die Hauptabstrahlachsen der Optikelemente einer anderen Ringreihe zu der besagten Ebene senkrecht zur Ringlängsachse geneigt erstrecken können. Die Neigungswinkel können sich dabei von Reihe zu Reihe schrittweise ändern, wobei die Neigungswinkel der in einer Reihe angeordneten Optikelemente gleich sein können.

Insbesondere können die Optikelemente matrixartig oder wolkenförmig verteilt auf einer gemeinsamen, kugeligen Oberfläche nebeneinander bzw. übereinander angeordnet sein und im Wesentlichen denselben Abstand vom Zentrum des zu bestrahlenden Aufnahmeraums haben. Grundsätzlich wäre es aber auch möglich, die Optikelemente in verschiedenen Abständen vom Zentrum des zu bestrahlenden Aufnahmeraums anzuordnen, beispielsweise auf zwei oder drei kugeligen Oberflächen mit unterschiedlichen Kugeldurchmessern zu positionieren, wobei die in dieser Weise gestaffelt angeordneten Optikelemente nichtsdestotrotz mit ihren Hauptabstrahlachsen radial zum Zentrum des Aufnahmeraums angeordnet sein können bzw. die mehreren kugeligen Oberflächen verschiedenen Durchmessers, auf denen die Optikelemente verteilt angeordnet sind, konzentrisch sein können.

Insbesondere sind die Lichtquellen und/oder Optikelemente in dichtgepackter Anordnung um den Aufnahmeraum herum verteilt angeordnet. Um eine dichtestmögliche Anordnung auf einer gemeinsamen, gekrümmten - virtuellen - Oberfläche zu erreichen, können die Optikelemente in sich zwischen benachbarten Optikelementen ergebende Zwischenräume hineinversetzt bzw. ineinander verschachtelt platziert sein, um die sich aufgrund der Umrißkonturen der Optikelemente ergebenden Zwischenräume zu nutzen so gut es geht. Hierdurch kann bei insgesamt kleiner Bauweise eine hohe Leistungsdichte erzielt werden.

Vorteilhafterweise können die Lichtquellen und/oder Optikelemente auf einem ringförmigen Streifen einer gemeinsamen Kugeloberfläche angeordnet sein, deren Kugelmittelpunkt das Zentrum des Aufnahmeraums bildet.

Die Lichtquellen und/oder Optikelemente können vorteilhafterweise in zumindest zwei oder drei Reihen über- und/oder nebeneinander um den Aufnahmeraum herum angeordnet sein, wobei die Reihen jeweils einen Kreisring bilden können und/oder die Optikelemente in verschiedenen Reihen zumindest näherungsweise denselben Abstand von dem Zentrum des Aufnahmeraums haben können.

Insbesondere können die Optikelemente, die in verschiedenen Reihen angeordnet sind, zueinander verkippte Hauptabstrahlachsen besitzen.

Um eine möglichst dichte Packung bzw. Anordnung der Optikelemente um den Aufnahmeraum herum zu ermöglichen, können die Optikelemente in benachbarten Reihen zueinander versetzt angeordnet sein, sodass ein Optikelement in einer ersten Reihe etwa mittig zwischen zwei benachbarten Optikelementen in einer benachbarten zweiten Reihe angeordnet ist und dabei natürlich den Querversatz entsprechend der Reihenbreite zeigt. Der Versatz der Optikelemente in der ersten Reihe gegenüber den Optikelementen in der zweiten Reihe ist dabei in Reihenlängsrichtung gegeben und kann in etwa die Hälfte der Teilung bzw. die Hälfte des Abstands der Mittelpunkte zweier benachbarter Optikelemente in der benachbarten Reihe betragen. Sind beispielsweise in einer ringförmigen Reihe 12 Optikelemente angeordnet, sodass die Teilung zwischen zwei benachbarten Optikelementen 360°/12, d.h. 30° beträgt, kann die benachbarte, kreisförmige Reihe von ebenfalls 12 Optikelementen gegenüber der ersten Reihe um 15° verdreht sein.

Sind drei oder mehr Reihen von Optikelementen vorgesehen, können die Optikelemente in einer ersten und dritten Reihe einander überdeckend angeordnet sein bzw. Verbindungslinien zwischen jeweils zwei Optikelementen definieren, die senkrecht zu den Längsrichtungen beider Reihen stehen. Unabhängig von der genauen Ausrichtung der Verbindungslinien durch die jeweils nächstliegenden Optikelementepaare in der ersten und dritten Reihe, können die Optikelemente in der zweiten oder dazwischenliegenden Reihe etwa mittig zu den besagten Verbindungslinien durch die Optikelemente der ersten und dritten Reihe angeordnet sein.

Je nach Durchmesser der Optikelemente können unterschiedlich viele Reihen von Optikelementen und/oder unterschiedlich viele Optikelemente pro Reihe vorgesehen sein.

Beispielsweise können in Umfangsrichtung um den Aufnahmeraum herum verteilt 5 bis 50 oder 10 bis 40 oder 15 bis 30 Optikelemente angeordnet sein, wobei beispielsweise 2 oder 3 oder 4 Reihen mit jeweils vergleichbar vielen Optikelementen in der genannten Größenordnung übereinander vorgesehen sein können, sodass beispielsweise bei drei Reihen etwa 50 bis 70 Optikelemente ein etwa kugelkranzförmiges Optikelementefeld bilden können.

Betrachtet man das insgesamt etwa kugelige Optikelementefeld definiert das Optikelementefeld eine kugelkranzförmige Kontur, die sich um den Aufnahmeraum herum erstreckt und zu einer Einsetzöffnung des Aufnahmeraums hin offen ist. Insbesondere kann das kugelkranzförmige Optikelementefeld nach oben und nach unten hin offen ausgebildet sein, um ein Reaktionsgefäß in einfacher Weise von oben her in den Aufnahmeraum innerhalb des kugelkranzförmigen Optikelementefelds einsetzen und von unten her eine Aufstandsfläche für das einzusetzende Reaktionsgefäß vorsehen zu können. Grundsätzlich wäre es aber auch möglich, das kugelkranzförmige Optikelementefeld nur zur Aufnahmeraumöffnung hin offen auszubilden und beispielsweise das Optikelementefeld auch zum Boden hin zu schließen, beispielsweise wenn das Reaktionsgefäß durch einen Halter von oben her im Aufnahmeraum gehalten werden kann.

Betrachtet man einen Querschnitt des kugelkranzförmigen Optikelementefelds, können die Kugelkranzsegmente einen Segmentewinkel im Bereich von 30° bis 90° oder 40° bis 70° einschließen, was einen guten Kompromiss zwischen hoher Leistungsdichte und einfachem Einsetzen des Reaktionsgefäßes ergibt.

Vorteilhafterweise können die Optikelemente rotationssymmetrisch ausgebildet sein und/oder eine vorzugsweise kreisförmige Umfangskontur besitzen, wobei die Optikelemente mit ihren Rotationsachsen auf ein gemeinsames Zentrum des Aufnahmeraums ausgerichtet sein können.

Besitzen die Optikelemente eine polygonzugförmige, bspw. 6-eckige Querschnittskontur, können die streifenförmigen Umfangsabschnitte durch entsprechendes Verdrehen um die Rotationsachse in Deckung miteinander gelangen. Insbesondere kann aber auch eine kreisförmige Umfangskontur vorgesehen sein.

In Weiterbildung der Erfindung kann jeweils einer näherungsweise punktförmigen Lichtquelle jeweils ein Optikelement zugeordnet sein, wobei als Lichtquelle insbesondere eine LED oder auch ein LED-Cluster mit vorzugsweise verschiedenfarbigen Einzel-LED-Elementen vorgesehen sein kann. Beispielsweise kann ein clusterartiger LED-Baustein mit 2, 3 oder 4 unmittelbar nebeneinander angeordneten, auf einer gemeinsamen Trägerplatine montierten LED-Einzelelementen vorgesehen sein und einem Optikelement zugeordnet sein, das das abgestrahlte Licht des LED-Clusters einfängt und auf das Zentrum des Aufnahmeraums lenkt.

Vorteilhafterweise können die genannten LEDs mit ihren Hauptabstrahlachsen radial zu einer gemeinsamen Kugeloberfläche ausgerichtet und/oder auf das Zentrum des Aufnahmeraums ausgerichtet sein. Unabhängig von einer radialen bzw. auf ein gemeinsames Zentrum gerichteten Hauptabstrahlachse können die LEDs vorteilhafterweise so ausgerichtet sein, dass das abgegebene Direktlicht auf das Zentrum des Aufnahmeraums abgestrahlt wird. Mit anderen Worten können die LEDs in den Aufnahmeraum hineinschauen.

Die Optikelemente können grundsätzlich verschieden ausgebildet sein, wobei insbesondere Linsen als Optikelemente vorgesehen sein können, die das Licht der jeweils zugeordneten Lichtquelle vorteilhafterweise vollständig einfangen können und zu einem Lichtbündel formen können, das auf das Zentrum des Aufnahmeraums gerichtet ist.

Alternativ oder zusätzlich kann zumindest einer oder mehreren Lichtquellen aber auch ein Reflektor als Optikelement zugeordnet sein, der das jeweils abgestrahlte Licht der Lichtquelle einfängt und zu einem Lichtbündel formt, das auf das Zentrum des Aufnahmeraums gerichtet ist.

Dabei ist es auch möglich, einen Teil der Optikelemente als Linse auszubilden und einen anderen Teil der Optikelemente als Reflektor auszubilden.

Alternativ oder zusätzlich sind auch Mischformen von Linsen und Reflektoren möglich, beispielsweise dergestalt, dass an einer Linse ein Reflektorkragen angeformt ist und/oder eine Mantelfläche einer Linse reflektierend beschichtet ist.

Vorteilhafterweise können Lichtquellen verschiedener Lichtfarben vorgesehen sein, sodass durch unterschiedliche Ansteuerung der Lichtquellen verschiedene Lichtfarben bzw. verschiedene spektrale Verteilungen erzielt werden können. Dabei können verschiedenfarbige Lichtquellen verschiedenen Optikelementen zugeordnet sein. Werden in der vorgenannten Weise LED-Cluster mit verschiedenfarbigen Einzel-LED-Elementen verwendet, können verschiedene Lichtfarben auch an einem Optikelement erzeugt werden.

Vorteilhafterweise sind Lichtquellen gleicher Farbe auf gegenüberliegenden Seiten des Aufnahmeraums angeordnet, insbesondere punktspiegelsymmetrisch bezüglich des Zentrums des Aufnahmeraums gegenüberliegend angeordnet, um ein homogenes Strahlungsfeld für den jeweiligen Farbkanal zu erzeugen und eine sensorbasierte In-Situ-Steuerung bzw. -Erfassung zu erleichtern.

Vorteilhafterweise können Lichtquellen zumindest einer Farbe dimmbar ausgebildet bzw. angesteuert werden, um multispektrale Bestrahlungen des Aufnahmeraums zu ermöglichen und/oder eine größere Variabilität beim Einstellen der Lichtspektren zu haben.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Darstellung eines Lichtreaktors nach einer vorteilhaften Ausführung der Erfindung, wobei der Reaktor an seiner Oberseite eine verschließbare Öffnung zum Einsetzen eines Reaktionsgefäßes besitzt,
- Fig. 2:: eine perspektivische Darstellung des Aufnahmeraums des Lichtreaktors und der drum herum angeordneten Optikelemente zum Bestrahlen eines im Aufnahmeraum positionierten Reaktionsgefäßes,
- Fig. 3:: eine schematische Darstellung des kugelkranzförmigen Optikelementefelds um den Aufnahmeraum herum, wobei Fig. 3a die punktlsymmetrisch gegenüberliegend angeordneten, verschiedenen Farbkanäle perspektivisch darstellt und Fig. 3b eine Schnittansicht der kugelkranzförmigen Anordnung der Optikelemente zeigt und Fig. 3c den zwischen zwei Kegeln eingeschnürten Strahlungsraum zeigt, den die Lichtbündel aller Strahler gemeinsam bilden,
- Fig. 4:: eine Darstellung der Energiefeldverteilung im Zentrum des Aufnahmeraums orthogonal zur zentralen Strahlungsachse eines jeweiligen Lichtbündels, und
- Fig. 5:: eine schematische Darstellung einer Ausführungsvariante, gemäß der eine Tageslichtversorgung der Optikelemente über Lichtleiter vorgesehen ist und die Enden der Lichtleiter als Lichtquellen fungieren.

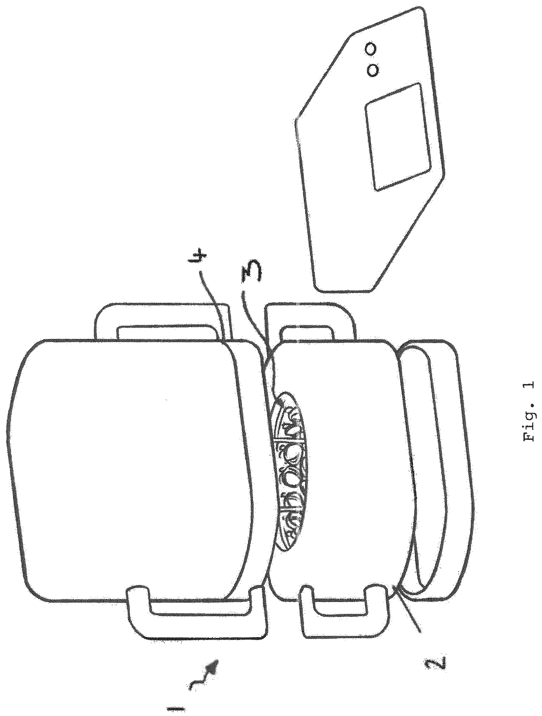

Wie Figur 1 zeigt, umfasst der Lichtreaktor 1 ein geschlossenes bzw. verschließbares Gehäuse 2, das beispielsweise im Wesentlichen zylindrisch ausgebildet sein kann und mit einer Aufstandsfläche aufrecht am Boden stehen kann.

Am Reaktorgehäuse 2ist eine verschließbare Befüllöffnung 3 vorgesehen, die durch einen Deckel 4 verschlossen wird.

Im Inneren des Gehäuses 2 ist ein Optikelementefeld 5 vorgesehen, das eine Vielzahl an Optikelementen 6 umfasst und sich ringförmig um einen Aufnahmeraum 7 herum erstreckt, der durch die genannte Befüllöffnung 3 des Gehäuses 2 zugänglich ist und in den durch die genannte Befüllöffnung 3 - beispielsweise von oben her - ein Reaktionsgefäße 8 beispielsweise in Form von Phiolen oder Glaskolben eingesetzt werden.

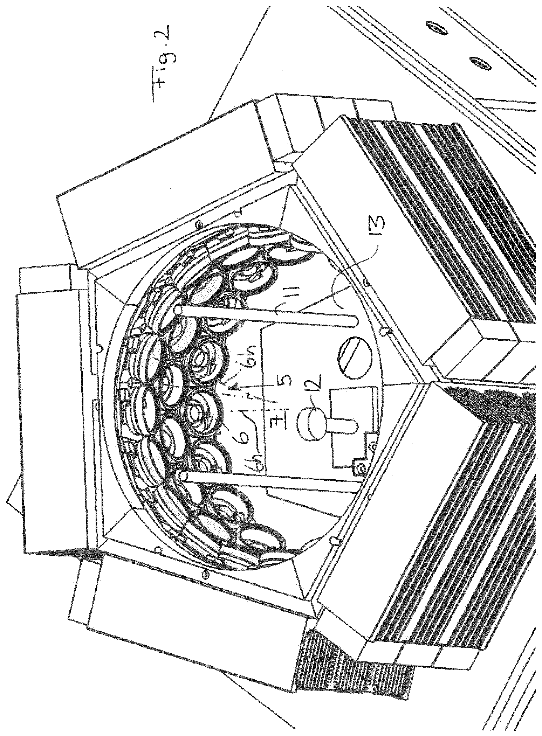

Wie Figur 2 zeigt, kann in dem Aufnahmeraum 7 eine Montagehalterung 11 zum Halten bzw. Befestigen der Reaktionsgefäße 8 vorgesehen sein. Alternativ wäre es aber auch möglich, die Reaktionsgefäße 8 einfach auf einem Boden 13 oder einer plattformähnlichen Aufstandsfläche im Inneren des Gehäuses 2 abzustellen. Auch ein Aufhängen des Reaktionsgefäßes 8 an einer Decke des Aufnahmeraums 7, beispielsweise am Deckel 4, ist möglich.

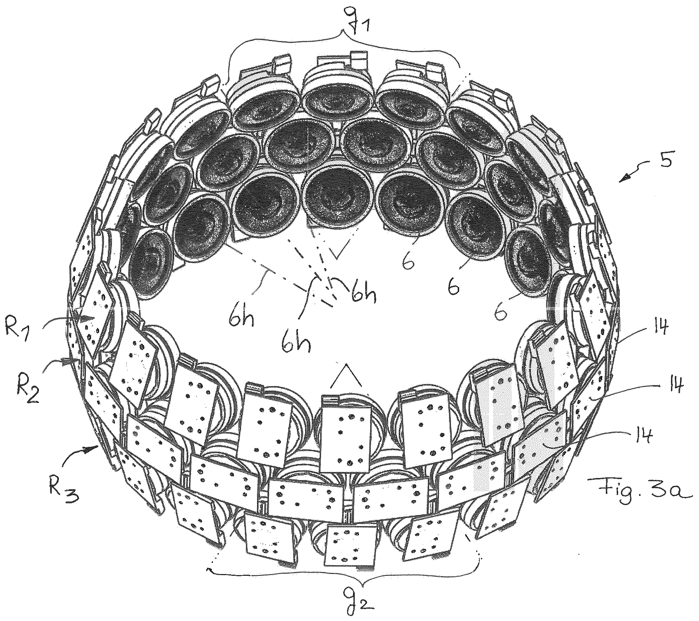

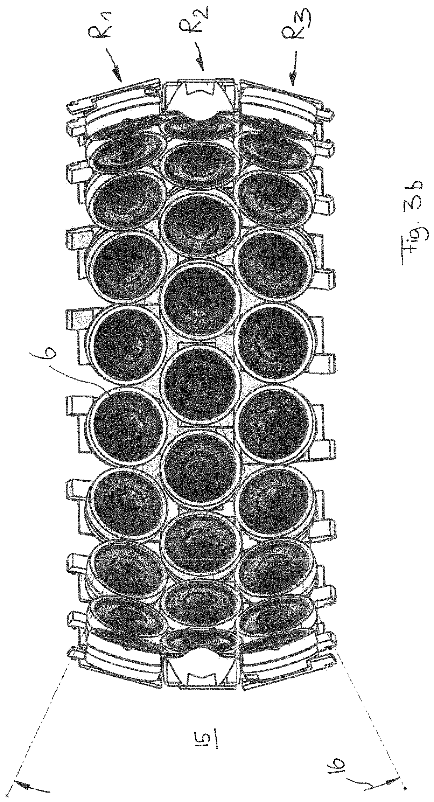

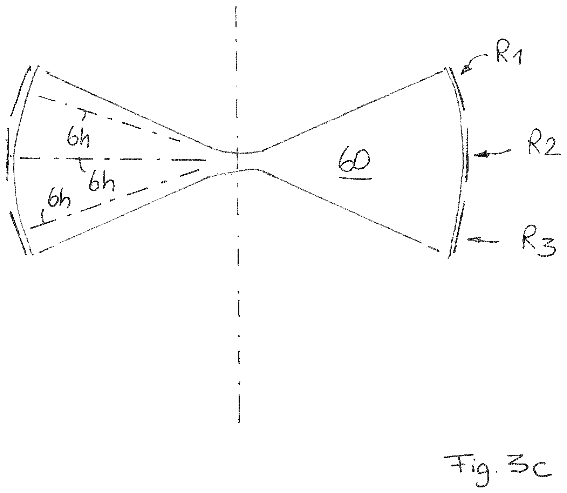

Wie die Figuren 2 und 3 zeigen, ist das Optikelementefeld 5 insgesamt betrachtet nach Art eines Kugelkranzes ausgebildet, der einerseits zum Boden 13 des Gehäuses 2 und andererseits zur Befüllöffnung 3 des Gehäuses 2 hin offen ausgebildet ist.

Insbesondere können die Optikelemente 6 auf einer kugeligen Oberfläche 9 matrixartig verteilt angeordnet sein, sodass die Optikelemente 6 jeweils auf das Zentrum des Aufnahmeraums 7 blicken bzw. mit den Hauptabstrahlachsen jeweils auf das Zentrum 10 des Aufnahmeraums 7 im Inneren des Optikelementefelds 5 ausgerichtet sind.

Die genannten Optikelemente 6 können vorteilhafterweise als Linsen ausgebildet sein, die beispielsweise aus transparentem Silikon spritzgegossen oder auch in anderer Weise, beispielsweise aus einem anderen Kunststoff oder auch aus Glas hergestellt sein können. Die genannten Optikelemente 6 können dabei rotationssymmetrisch ausgebildet sein und mit ihrer Rotationsachse auf das genannte Zentrum 10 des Aufnahmeraums 7 gerichtet sein. Beispielsweise können im Querschnitt kreisrunde oder auch mehreckige, beispielsweise sechseckige Linsen und/oder Reflektoren vorgesehen sein. Werden beispielsweise sechseckige Reflektoren und/oder Linsen vorgesehen, kann eine praktisch spaltfreie, sehr dichte Packung der Optikelemente 6 auf der Anordnungsoberfläche 9 erreicht werden.

Bei Anordnung auf der kugeligen Oberfläche 9 besitzen die Optikelemente 6 im Wesentlichen denselben Abstand vom Zentrum des Aufnahmeraums 7.

Wie die Figuren 2 und 3 zeigen, können die Optikelemente 6 in mehreren ringförmigen Reihen auf der kugeligen Oberfläche 9 verteilt angeordnet sein, wobei die Optikelemente 6 in einer Reihe zu den Optikelementen 6 in der anderen Reihe versetzt angeordnet sein können, um die Optikelemente 6 insgesamt möglichst dicht gepackt anordnen zu können.

Betrachtet man beispielsweise Verbindungslinien durch die Mittelpunkte jeweils zweier übereinanderliegender Optikelemente 6 in der obersten Reihe und in der untersten Reihe, sind die Optikelemente 6 in der mittleren, dazwischenliegenden Reihe mittig zwischen den besagten Verbindungslinien angeordnet. Mit anderen Worten können die Reihen von Optikelementen 6 zueinander um jeweils das halbe Teilungsmaß zwischen zwei benachbarten Optikelementen 6 in einer Reihe verdreht sein. Sind beispielsweise in der mittleren Reihe 20 Optikelemente 6 vorgesehen, können die oberen und unteren Reihen jeweils um ein 40tel von 360° gegenüber der mittleren Reihe verdreht sein, vgl. Figur 3.

Hierdurch kann der sich zwischen zwei benachbarten Linsen einer Reihe ergebende Zwischenraum für die Positionierung der Optikelemente der benachbarten Reihen genutzt werden. Dementsprechend kann der Abstand zweier Reihen, gemessen zwischen den Reihen Mittellängslinien, kleiner sein als der Durchmesser der Optikelemente 6.

Die Optikelemente 6 können eine zueinander identische Konturierung besitzen, insbesondere alle rotationssymmetrisch ausgebildet sein und kreisrunde Umrisskonturen aufweisen, vgl. Figur 2 und Figur 3.

Auf einer Außenseite der Optikelemente 6 können Lichtquellen 14 angeordnet sein, die vorzugsweise als LEDs oder LED-Cluster ausgebildet sein können. Unabhängig von der Ausbildung der Lichtquellen 14 als LEDs kann jedem Optikelement 6 eine eigene Lichtquelle zugeordnet sein, wobei die Vielzahl an Lichtquellen 14 vorteilhafterweise ebenfalls auf einer kugeligen Oberfläche, deren Kugelmittelpunkt mit dem Zentrum 10 des Aufnahmeraums 7 einhergehen kann, verteilt angeordnet sein können, insbesondere derart, dass die Hauptabstrahlachsen der Lichtquellen 14 auf das Zentrum 10 des Aufnahmeraums 7 gerichtet sind.

Betrachtet man eine Schnittebene 15, die durch einen Längsschnitt enthalten die Hauptachse des kugelkranzförmigen Optikelementefelds 5 bilden kann, kann das Optikelementefeld 5 insgesamt betrachtet über einen kugeligen Sektor mit einem Sektorenwinkel 16 im Bereich von 30° bis 90° erstrecken, vgl. Figur 3b.

Die genannten Lichtquellen 14 können verschiedenfarbiges Licht abstrahlen, wobei es grundsätzlich möglich wäre, jedem Optikelement 6 ein mehrfarbiges LED-Cluster als Lichtquelle 14 zuzuordnen, um an jedem Optikelement 6 verschiedene Lichtfarben erzeugen zu können. Alternativ kann es aber auch ausreichend sein, an verschiedenen Optikelementen 6 verschiedene Lichtfarben vorzusehen, wobei vorteilhafterweise die möglichen Farbkanäle punktspiegelsymmetrisch gegenüberliegend angeordnet sind, um ein homogenes Energiefeld für den Einzelfarbkanal zu erzeugen und eine sensorbasierte In-Situ-Kontrollmöglichkeit zu erleichtern.

Beispielsweise kann das Optikelementefeld 5 in jeweils V-förmige Farbkanalsegmente unterteilt sein, wobei gleichfarbige Farbkanalsegmente einander gegenüberliegen und zueinander punktspiegelsymmetrisch ausgerichtet sind. Beispielsweise kann ein grünes Farbkanalsegment G₁ bzw. dessen Optikelemente 6 ein aufrecht stehendes Dreieck bilden, während das gegenüberliegende grüne Segment G₂ ein auf dem Kopf stehendes Dreieck bildet, vgl. Figur 3a.

Die Optikelemente 6 sind dazu konfiguriert, im Zentrum des Aufnahmeraums 7 ein sehr gleichmäßiges Energiefeld zu erzeugen.

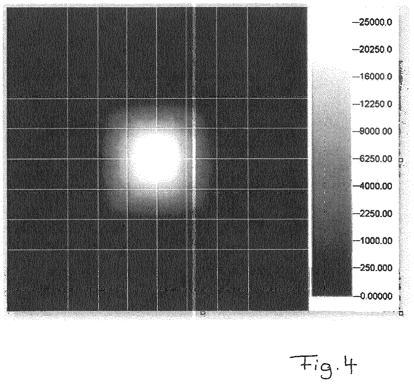

Figur 4 zeigt die gleichmäßige Energiefeldverteilung im Zentrum, wobei beispielsweise die Teilansicht a der Figur 4 die Energiefeldverteilung des kaltweißen Kanals im Zentrum des Aufnahmeraums 7 orthogonal zur zentralen Strahlungsachse zeigt, das heißt in der in Figur 3 eingezeichneten Schnittebene 15. Die Gitterlinien in Figur 4 definieren ein 30 x 30 mm Gitter, woraus ersichtlich wird, dass die Energiefeldverteilung sehr homogen bzw. gleichmäßig ist.

Die Teilansicht b der Figur 4 zeigt die Energiefeldverteilung des UV-Lichtkanals im Zentrum orthogonal zur zentralen Strahlungsachse und verdeutlicht ebenfalls eine sehr gleichmäßige Verteilung.

Vorteilhafterweise können die verschiedenen Farbkanäle dimmbar angesteuert werden, um multispektrale Anregungen durch das Zuschalten eines oder mehrerer dimmbar ausgeführter Farbkanäle zu erreichen.

In der in Figur 3 beispielhaft gezeigten Anordnung sind neben dem schon genannten kaltweißen Kanal noch ein Blaulichtkanal, ein Grünlichtkanal und ein Rotlichtkanal vorgesehen, die jeweils durch punktspiegelsymmetrisch gegenüberliegende Segmentbereiche der kugeligen Anordnung der Optikelemente 5 gebildet werden.

Je nach Bestrahlungsaufgaben können jedoch auch andere LED- und Optikelementeanordnungen gewählt werden.

Vorteilhafterweise kann der Lichtreaktor 1 zur Herstellung von Wasserstoff einge-
setzt werden, und zwar insbesondere durch Bestrahlung von Wasser und einem Substrat mit Licht und mithilfe eines oder mehrerer Katalysatoren. Dabei kann Sonnenlicht von einem sogenannten Chromophor, das heißt einem Farbträger und/oder einem Farbstoff absorbiert werden, wobei der genannte Chromophor die Lichtenergie über einen Wasserreduktionskatalysator an das Wasser überträgt. Das Wasser wird mithilfe dieser Energie in molekularen Wasserstoff H₂ umgewandelt.

Der genannte Chromophor regeneriert sich indem er aus einem Substrat ein Oxidationsprodukt, das im Idealfall molekularer Sauerstoff O₂ sein kann, herstellt. H₂ kann als Treibstoff verwendet werden, und je nach Systemdesign kann das Oxidationsprodukt als Rohstoff verwendet werden.

Der Chromophor und andere eingesetzte Substanzen sind in der Lage, diese Reaktion wiederholt durchzuführen, wobei dieses Verhalten die Substanzen als Katalysatoren identifiziert. Die Lebensdauer und die Reaktionsgeschwindigkeit der Katalysatoren sind dabei essenzielle Faktoren, um die Güte des Systems zu beschreiben. Dabei gilt es das Produkt dieser Faktoren, die sogenannte Turnover Number (TON) zu maximieren, um eine hohe molekulare Wirtschaftlichkeit zu erreichen. Die genannte Turnover Number gibt an, wie viel Wasserstoff aus einer bestimmten Menge des Katalysesystems unter Lichteinwirkung erhalten wird.

Vorteilhafterweise kann als Chromophor (Katalysator 1) [Ru₂(bpy)₄(trans,trans,trans-tetra-((bis-2-methoxyphenyl)phosphino)cyclobutan)](PF₆)₄ und/oder als Wasserreduktionskatalysator [PdCl₂(*N,N*-Bis((bis-2-methoxyphenyl)phosphinomethyl)ethylamin] Verwendung finden. Als Substrate können Wasser und/oder Ascorbinsäure verwendet und als Produkte Wasserstoff und/oder Dehydroascorbinsäure erhalten werden.

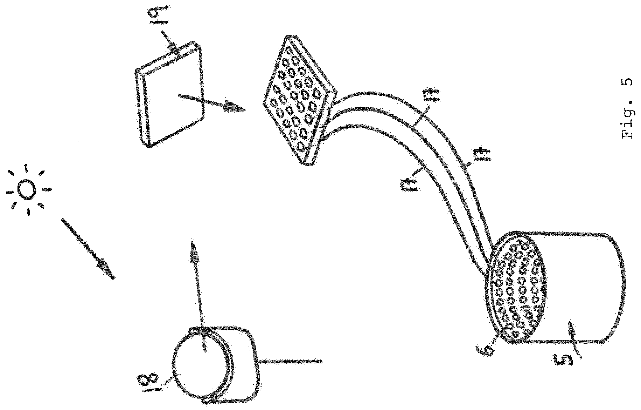

Bei der Ausführung nach den Figuren 2 und 3 sind als Lichtquellen 14 LEDs bzw. LED-Cluster vorgesehen. Alternativ hierzu kann jedoch auch zumindest ein Teil der Lichtquellen 14 von den Austrittsenden von Lichtleitern 17 gebildet sein, die einem jeweiligen Optikelement 6 zugeordnet sein können. Wie Figur 5 zeigt, kann über die genannten Lichtleiter 17 beispielsweise Sonnenlicht zu den Optikelementen 6 des Lichtreaktors 1 geleitet werden. Das Sonnenlicht kann beispielsweise über einen Heliostaten 18 und eine geeignete Umlenkoptik 19 auf Einkoppelelemente gelenkt werden, die das Sonnenlicht in die Lichtleiter 17 einspeisen, um über diese dann das Licht zu den Optikelementen 6 zu lenken.

## Patentansprüche

1. Lichtreaktor zur photochemischen Stofferzeugung und/oder -behandlung, mit einem Aufnahmeraum (7) zum Aufnehmen zu bestrahlender Stoffe und eines Reaktionsgefäßes (8) mit solchen Stoffen, einer Vielzahl von Lichtquellen (14) und einer Vielzahl von Optikelementen (6), die in einem ringförmigen Bereich in mehreren Reihen (R1, R2, R3) um den Aufnahmeraum (7) herum verteilt angeordnet sind, **dadurch gekennzeichnet, dass** die Optikelemente (6) dazu ausgebildet sind, Lichtbündel mit Hauptabstrahlachsen (6h) zu formen, die von Reihe zu Reihe (R1, R2, R3) zu einer Längsachse des ringförmigen Bereichs unterschiedlich verkippt sind und gemeinsam einen zwischen zwei Kegelspitzen eingeschnürten Strahlungsraum (60) bilden, dessen Zentrum im zentralen Bereich des Aufnahmeraums (7) liegt,
die Hauptabstrahlachsen (6h) verteilt zu einer Kugeloberfläche, die sich um das Zentrum des Aufnahmeraums (7) herum erstreckt, senkrechtstehend angeordnet sind,
die Optikelemente (6) ein ringförmiges, kugelig konturiertes Optikelementefeld (5) bilden, das zu einer Befüllöffnung (3) des Lichtreaktors (1) hin offen ausgebildet ist, und
der Lichtreaktor als Batchreaktor ausgebildet ist und ein Reaktorgehäuse (2) mit der genannten Befüllöffnung (3), die durch einen Deckel (4) verschließbar ist, zum Einsetzen des Reaktionsgefäßes aufweist.

2. Lichtreaktor nach einem der vorhergehenden Ansprüche, wobei die Lichtquellen (14) und/oder die Optikelemente (6) matrixartig oder wolkenförmig, insbesondere gleichmäßig, verteilt auf einer zumindest näherungsweise kugeligen, gemeinsamen Oberfläche angeordnet sind.

3. Lichtreaktor nach einem der vorhergehenden Ansprüche, wobei die Reihen (R1, R2, R3) zueinander verdreht und hierdurch die Optikelemente (6) benachbarter Reihen zueinander versetzt sind, wobei der Versatz im Wesentlichen der halben Teilung zwischen benachbarten Optikelementen (6) in einer Reihe entspricht.

4. Lichtreaktor nach einem der vorhergehenden Ansprüche, wobei die Optikelemente (6) rotationssymmetrisch ausgebildet sind, insbesondere eine kreisrunde Umfangskontur besitzen, und mit ihren Rotationssymmetrieachsen auf das Zentrum des Aufnahmeraums (7) ausgerichtet sind.

5. Lichtreaktor nach einem der vorhergehenden Ansprüche, wobei die Optikelemente (6) bezüglich des Zentrums des Aufnahmeraums (7) punktsymmetrisch einander gegenüberliegend verteilt angeordnet sind, wobei einander gegenüberliegende Optikelemente (6) zueinander koaxiale Hauptabstrahlachsen (6h) besitzen.

6. Lichtreaktor nach einem der vorhergehenden Ansprüche, wobei zumindest ein Teil der Optikelemente (6) als Linse ausgebildet ist.

7. Lichtreaktor nach einem der vorhergehenden Ansprüche, wobei zumindest ein Teil der Optikelemente (6) als Reflektor ausgebildet ist.

8. Lichtreaktor nach einem der vorhergehenden Ansprüche, wobei verschiedenfarbige Lichtquellen (14) vorgesehen sind, wobei die Lichtquelle (14) mehrere, voneinander separat ansteuerbare Farbkanäle bildet, wobei zumindest ein Farbkanal dimmbar ausgebildet ist, sodass eine multispektrale Bestrahlung einstellbar ist, und wobei Lichtquellen gleicher Lichtfarbe bezüglich des Zentrums des Aufnahmeraums (7) punktsymmetrisch einander gegenüberliegend verteilt angeordnet sind.

9. Lichtreaktor nach einem der vorhergehenden Ansprüche, wobei innerhalb des oder an dem Optikelementefeld (5) eine Sensorik (12) zum Erfassen der Lichtintensität und/oder des Spektrums der Bestrahlung in dem Aufnahmeraum (7) vorgesehen ist, und wobei eine Steuervorrichtung zum variablen Ansteuern der Lichtquellen in Abhängigkeit eines Sensorsignals der Sensorik (12) vorgesehen ist.

10. Lichtreaktor nach einem der vorhergehenden Ansprüche, wobei die Optikelemente (6) in dem ringförmigen Bereich um den Aufnahmeraum (7) herum dicht gepackt nebeneinander angeordnet sind, sodass mehr als 50% oder mehr als 66% oder mehr als 75% der Fläche des ringförmigen Bereichs von den Optikelementen (6) belegt sind.

11. Lichtreaktor nach einem der vorhergehenden Ansprüche, wobei zumindest einige der Lichtquellen (14) von Endabschnitten von Lichtleitern (17) oder daran angeschlossene Auskoppelelemente gebildet sind, wobei die genannten Lichtleiter (17) an eine Einkoppeleinrichtung zum Einkoppeln von Sonnenlicht angeschlossen sind.

12. Lichtreaktor nach dem vorhergehenden Anspruch, wobei die Einkoppel-einrichtung einen Heliostaten umfasst.

13. Verfahren zur synthetischen Stofferzeugung und/oder - behandlung in einem Lichtreaktor gemäß einem der Ansprüche 1-12, bei dem ein durch Licht zu bestrahlender Stoff oder ein Stoffgemisch im Zentrum eines Aufnahmeraums (7) positioniert wird, **dadurch gekennzeichnet, dass** der Stoff oder das Stoffgemisch im Aufnahmeraum (7) durch eine Vielzahl von Lichtbündeln bestrahlt wird, die von einer Vielzahl von Lichtquellen (14) und einer Vielzahl von Optikelementen (6), die matrixartig in einem ringförmigen Bereich um den Aufnahmeraum (7) herum verteilt angeordnet sind, separat erzeugt und in einem zentralen Bereich des Aufnahmeraums (7) überlagert werden.

14. Verfahren nach dem vorhergehenden Anspruch, wobei ein Stoffgemisch aus Wasser, einem Substrat und zumindest einem Katalysator mit Licht bestrahlt wird, sodass das Wasser in molekularen Wasserstoff H₂ umgewandelt wird, und wobei dem Wasser als Substrat Ascorbinsäure zugegeben wird und als Katalysatoren ein Chromophor, insbesondere Ru₂(bpy)₂(transe), und ein Wasserreduktionskatalysator, insbesondere PdCl₂(PNP^{Et}) verwendet werden.

15. Verwendung eines Lichtreaktors nach einem der Ansprüche 1 bis 12zur Erzeugung von molekularem Wasserstoff H₂.

## Claims

1. A light reactor for photochemical material production and/or treatment, comprising a receiving space (7) for receiving materials to be irradiated and a reaction vessel (8) containing such materials, a plurality of light sources (14) and a plurality of optical elements (6) which are distributed in an annular region in a plurality of rows (R1, R2, R3) around the receiving space (7), **characterized in that** the optical elements (6) are designed to form light bundles having main emission axes (6h) which, from row to row (R1, R2, R3), are tilted differently with respect to a longitudinal axis of the annular region and together form an irradiation space (60) constricted between two cone tips, the center of which irradiation space lies in the central region of the receiving space (7),
the main emission axes (6) are distributed perpendicularly to a spherical surface which extends around the center of the receiving space (7),
the optical elements (6) form an annular, spherically contoured optical element field (5) which is configured to be open towards a filling opening (3) of the light reactor (1), and
the light reactor is configured as a batch reactor and includes a reactor housing (2) with said filling opening (3), which can be closed by a lid (4), for inserting the reaction vessel.

2. The light reactor according to any of the foregoing claims, wherein the light sources (14) and/or the optical elements (6) are distributed in a matrix-like or cloud-like manner, in particular in a uniform manner, on an at least approximately spherical common surface.

3. The light reactor according to any of the foregoing claims, wherein the rows (R1, R2, R3) are rotated relative to each other and thereby the optical elements (6) of adjacent rows are offset relative to each other, the offset being substantially equal to half the pitch between adjacent optical elements (6) in a row.

4. The light reactor according to any of the foregoing claims, wherein the optical elements (6) are of rotationally symmetrical design, in particular have a circular circumferential contour, and are aligned with their axes of rotational symmetry with the center of the receiving space (7).

5. The light reactor according to any of the foregoing claims, wherein the optical elements (6) are distributed point-symmetrically opposite each other with respect to the center of the receiving space (7), wherein mutually opposite optical elements (6) have mutually coaxial main emission axes (6h).

6. The light reactor according to any of the foregoing claims, wherein at least a part of the optical elements (6) is formed as a lens.

7. The light reactor according to any of the foregoing claims, wherein at least a part of the optical elements (6) is formed as a reflector.

8. The light reactor according to any of the foregoing claims, wherein differently colored light sources (14) are provided, wherein the light source (14) forms a plurality of separately actuatable color channels, wherein at least one color channel is configured to be dimmable so that a multispectral irradiation can be set, and wherein light sources of identical light color are distributed point-symmetrically opposite each other with respect to the center of the receiving space (7).

9. The light reactor according to any of the foregoing claims, wherein a sensor system (12) is provided within or on the optical element field (5) for detecting the light intensity and/or the spectrum of the irradiation in the receiving space (7), and wherein a control device is provided for variably actuating the light sources in dependence on a sensor signal of the sensor system (12).

10. The light reactor according to any of the foregoing claims, wherein the optical elements (6) are arranged closely packed one beside the other in the annular region around the receiving space (7), so that more than 50% or more than 66% or more than 75% of the surface of the annular region are occupied by the optical elements (6).

11. The light reactor according to any of the foregoing claims, wherein at least some of the light sources (14) are formed by end portions of light guides (17) or outcoupling elements connected thereto, said light guides (17) being connected to a coupling device for coupling sunlight.

12. The light reactor according to the foregoing claim, wherein the coupling device comprises a heliostat.

13. A method for synthetic material production and/or treatment in a light reactor according to any of claims 1-12, in which a material or a mixture of materials to be irradiated by light is positioned in the center of a receiving space (7), **characterized in that** the material or the mixture of materials is irradiated in the receiving space (7) by a plurality of light bundles which are generated separately by a plurality of light sources (14) and a plurality of optical elements (6) which are distributed in a matrix-like manner in an annular region around the receiving space (7) and are superimposed in a central region of the receiving space (7).

14. The method according to the foregoing claim, wherein a mixture of materials comprising water, a substrate and at least one catalyst is irradiated with light so that the water is converted to molecular oxygen H₂, and wherein ascorbic acid is added to the water as a substrate and a chromophore, in particular Ru₂(bpy)₂(transe), and a water reduction catalyst, in particular PdCl₂(PNP^{Et}) are used as catalysts.

15. The use of a light reactor according to any one of claims 1 to 12 for producing molecular hydrogen H₂.

## Revendications

1. Réacteur de lumière pour la production et/ou le traitement photochimique de matériaux, comprenant un espace de réception (7) pour recevoir des matériaux à irradier et un récipient de réaction (8) contenant de tels matériaux, une pluralité de sources lumineuses (14) et une pluralité d'éléments optiques (6) qui sont disposés dans une zone annulaire en plusieurs rangées (R1, R2, R3) réparties autour de l'espace de réception (7), **caractérisé en ce que** les éléments optiques (6) sont conçus pour former des faisceaux lumineux avec des axes d'émission principaux (6h) qui sont inclinés différemment d'une rangée à l'autre (R1, R2, R3) par rapport à un axe longitudinal de la zone annulaire et qui forment ensemble un espace de rayonnement (60) rétréci entre deux pointes de cône, dont le centre se trouve dans la zone centrale de l'espace de réception (7),
les axes d'émission principaux (6h) sont répartis perpendiculairement à une surface sphérique qui s'étend autour du centre de l'espace de réception (7),
les éléments optiques (6) forment un champ d'éléments optiques (5) annulaire, à contour sphérique, qui est réalisé ouvert vers une ouverture de remplissage (3) du réacteur de lumière (1), et
le réacteur de lumière est conçu comme un réacteur discontinu et présente un boîtier de réacteur (2) avec ladite ouverture de remplissage (3), qui peut être fermée par un couvercle (4), pour la mise en place du récipient de réaction.

2. Réacteur de lumière selon l'une quelconque des revendications précédentes, dans lequel les sources lumineuses (14) et/ou les éléments optiques (6) sont répartis à la manière d'une matrice ou d'un nuage, en particulier de manière uniforme, sur une surface commune au moins approximativement sphérique.

3. Réacteur de lumière selon l'une quelconque des revendications précédentes, dans lequel les rangées (R1, R2, R3) sont tournées les unes par rapport aux autres et, de ce fait, les éléments optiques (6) de rangées voisines sont décalés les uns par rapport aux autres, le décalage correspondant essentiellement à la moitié du pas entre des éléments optiques voisins (6) dans une rangée.

4. Réacteur de lumière selon l'une quelconque des revendications précédentes, dans lequel les éléments optiques (6) sont réalisés à symétrie de révolution, en particulier possèdent un contour périphérique circulaire, et sont orientés avec leurs axes de symétrie de révolution vers le centre de l'espace de réception (7).

5. Réacteur de lumière selon l'une quelconque des revendications précédentes, dans lequel les éléments optiques (6) sont répartis par rapport au centre de l'espace de réception (7) symétriquement par rapport à un point et opposés les uns aux autres, des éléments optiques (6) opposés les uns aux autres possédant des axes d'émission principaux (6h) coaxiaux les uns aux autres.

6. Réacteur de lumière selon l'une quelconque des revendications précédentes, dans lequel au moins une partie des éléments optiques (6) est réalisée sous forme de lentille.

7. Réacteur de lumière selon l'une quelconque des revendications précédentes, dans lequel au moins une partie des éléments optiques (6) est réalisée sous forme de réflecteur.

8. Réacteur de lumière selon l'une quelconque des revendications précédentes, dans lequel des sources lumineuses (14) de différentes couleurs sont prévues, dans lequel la source lumineuse (14) forme plusieurs canaux de couleur pouvant être actionnés séparément les uns des autres, dans lequel au moins un canal de couleur est conçu de manière dimmable, de sorte qu'une irradiation multispectrale peut être réglée, et dans lequel des sources lumineuses de même couleur de lumière sont réparties par rapport au centre de l'espace de réception (7) symétriquement par rapport à un point et en étant opposées les unes aux autres.

9. Réacteur de lumière selon l'une quelconque des revendications précédentes, dans lequel un système de capteurs (12) est prévu à l'intérieur ou sur le champ d'éléments optiques (5) pour détecter l'intensité lumineuse et/ou le spectre de l'irradiation dans l'espace de réception (7), et dans lequel un dispositif de commande est prévu pour actionner de manière variable les sources lumineuses en dépendance d'un signal de capteur du système de capteurs (12).

10. Réacteur de lumière selon l'une quelconque des revendications précédentes, dans lequel les éléments optiques (6) sont juxtaposés dans la zone annulaire autour de l'espace de réception (7) en étant étroitement tassés de sorte que plus de 50% ou plus de 66% ou plus de 75% de la surface de la zone annulaire sont occupés par les éléments optiques (6).

11. Réacteur de lumière selon l'une quelconque des revendications précédentes, dans lequel au moins certaines des sources lumineuses (14) sont formées par des parties d'extrémité de guides de lumière (17) ou par des éléments de découplage qui y sont connectés, lesdits guides de lumière (17) étant connectés à un dispositif de couplage pour coupler la lumière solaire.

12. Réacteur de lumière selon la revendication précédente, dans lequel le dispositif de couplage comprend un héliostat.

13. Procédé de production et/ou de traitement de matériaux synthétiques dans un réacteur de lumière selon l'une quelconque des revendications 1 à 12, dans lequel un matériau ou un mélange de matériaux à irradier par la lumière est positionné au centre d'un espace de réception (7), **caractérisé en ce que** le matériau ou le mélange de matériaux est irradié dans l'espace de réception (7) par une pluralité de faisceaux lumineux, qui sont générés séparément par une pluralité de sources lumineuses (14) et une pluralité d'éléments optiques (6) répartis à la manière d'une matrice dans une zone annulaire autour de l'espace de réception (7), et qui sont superposés dans une zone centrale de l'espace de réception (7).

14. Procédé selon la revendication précédente, dans lequel un mélange de matériaux constitué d'eau, d'un substrat et d'au moins un catalyseur est irradié avec de la lumière, de sorte que l'eau est convertie en hydrogène moléculaire H₂ , et dans lequel on ajoute à l'eau de l'acide ascorbique comme substrat et on utilise comme catalyseurs un chromophore, en particulier Ru₂(bpy)₂(transe), et un catalyseur de réduction d'eau, en particulier PdCl₂(PNP^{Et}).

15. Utilisation d'un réacteur de lumière selon l'une quelconque des revendications 1 à 12 pour la production d'hydrogène moléculaire H₂.
